# EUROPEAN PATENT SPECIFICATION

(11) **EP 2 988 514 B1**
(45) Date of publication and mention of the grant of the patent: **12.02.2020**
(21) Application number: 15180320.2
(22) Date of filing: 09.08.2015
(51) Int. Cl.: H04N 21/254, H04N 21/258, H04N 21/262, H04N 21/266, H04N 21/426, H04N 21/6334, H04N 21/2347, H04N 21/235, H04N 21/4623, H04N 21/4405

(54) **SYSTEM AND METHOD FOR CONTROLLING DIGITAL CINEMA CONTENT DISTRIBUTION**
SYSTEM UND VERFAHREN ZUR STEUERUNG VON DIGITALKINOINHALTSVERTEILUNG
SYSTÈME ET PROCÉDÉ DE COMMANDE DE DISTRIBUTION DE CONTENU CINÉMATOGRAPHIQUE NUMÉRIQUE

(30) Priority: 21.08.2014 US 201414465119
(43) Date of publication of application: 24.02.2016
(73) Proprietor: Qube Cinema Technologies Private Limited, Chennai 600014 (IN)
(72) Inventor: KUMAR, Senthil, 600014 Chenna (IN); RAMACHANDRAN, Rajesh, Burbank, CA California 91502 (US)
(74) Representative: Perry, Clifford

(56) References cited:
- EP-A1- 1 083 699
- WO-A1-2013/090485
- KR-A- 20110 037 800
- US-A1- 2002 080 975
- US-A1- 2002 136 407
- US-A1- 2011 282 915
- US-A1- 2012 121 236

## Description

### TECHNICAL FIELD

This application is directed, in general, to digital cinema and, more specifically, to a system and method for controlling digital cinema content distribution.

### BACKGROUND

Digital Cinema Initiatives (DCI) was established by Hollywood studios to create specifications for an open architecture for digital cinema to ensure a uniform and high level of technical performance, reliability and quality control. Security was one of the key aspects of digital cinema that the DCI specification (*see*, *e.g.*, www.dcimovies.com/specification/), first released in 2005 and subsequently updated multiple times, was designed to address.

In digital cinema, the basic unit of content is the "composition." A "composition" consists of one or more "reels," each of which references "picture," "sound" and "subtitle" "track files" formatted according to the Material exchange Format (MXF) and optionally encrypted using the well-known symmetric Advanced Encryption Standard (AES) algorithm. One or more compositions are packaged into a "Digital Cinema Package" (DCP) with XML files that define the contents of the DCP and include digital hash calculations that allow for the integrity of the DCP to be verified without requiring decryption keys, even when it is encrypted.

When a composition is encrypted, AES keys that are used to encrypt each track file are packaged together into a Key Delivery Message (KDM), which takes the form of an XML file. The AES keys themselves are encrypted using the well-known, asymmetric Rivest, Shamir, Adleman (RSA) algorithm, using the unique public key of each of the digital cinema players to which they are to be sent. Thus, only that targeted digital cinema player can decrypt the KDM using its private key and retrieve the AES keys required to decrypt the composition in the DCP.

The KDM also includes a validity window for the composition with start date and time and end date and time. This validity window of the KDM is observed by the target digital cinema player as a required rule defined in the DCI specification. The KDM specifies the composition it addresses by including the unique identifier of that composition. In addition to the validity window, the KDM may also specify whether forensic watermarking of the picture and/or sound should be enabled during playback. This, too, is a rule defined in the DCI specification. Various standards published by the Society of Motion Picture and Television Engineers (SMPTE) detail the structure of the MXF track file, the DCP and its various components and the KDM.

Published PCT application WO 2013/090485 A1 discloses a method and system for providing decryption key information in a digital cinema package. Information relating to at least the source of a decryption key is included in the digital cinema package. The key source references or information are maintained by a digital cinema server of theater management system in association with the encrypted features such that when keys need to be obtained for feature presentation, the key source information and decryption keys can be automatically retrievable.

Published US patent application 2002/0136407 A1 discloses a method in which text data is first encrypted using a data encrypting key that is generated at the time of encryption. The data encrypting key is then encrypted using a key encrypting key and information derived from the location of the intended receiver. The encrypted data encrypting key is then transmitted to the receiver along with the ciphertext data. The receiver both must be at the correct location and must have a copy of the corresponding key decrypting key in order to derive the location information and decrypt the data encrypting key. After the data encrypting key is decrypted, it is used to decrypt the ciphertext. If an attempt is made to decrypt the data encrypting key at an incorrect location or using an incorrect secret key, the decryption will fail.

### SUMMARY

One aspect provides an exhibition KDM distribution system operable to receive a distribution KDM (DKDM) as in appended claim 1.

Another aspect provides a method of creating an exhibition KDM, as in appended claim 7.

Yet another aspect provides a system for controlling digital cinema content distribution, as in appended claim 13.

Still another aspect provides an exhibition KDM as in appended claim 14.

Yet still another aspect provides a digital cinema player, as in appended claim 17.

### BRIEF DESCRIPTION

Reference is now made to the following descriptions taken in conjunction with the accompanying drawings, in which:
FIG. 1 is a block diagram of one embodiment of a system for controlling digital cinema content distribution including a system for distributing KDMs and various, typically geographically distributed players for playing compositions contained in DCPs, using keys contained in the KDMs; and
FIG. 2 is a flow diagram of one embodiment of a method of distributing KDMs to various, typically geographically distributed players for playing compositions contained in DCPs.

### DETAILED DESCRIPTION

As stated above, the conventional KDM specifies the composition it addresses by including the unique identifier of that composition and includes a validity window for the composition with start date and time and end date and time. It is realized herein that the conventional KDM in essence enforces "what" the content referenced is (*i.e.* the Composition), "who" (*i.e.* which digital cinema player) can play that content, and "when" that content can be played (*i.e.* the validity window). It is realized herein that the KDM can be enhanced to include "where" the composition can be played (*i.e.* the location where the content may be played).

Digital cinema players are uniquely identified by unique digital certificates, called "device certificates" in the industry. The public key of each digital cinema player is contained in its corresponding device certificate and is used to target a KDM at a specific digital cinema player using RSA encryption. The AES keys of all the encrypted track files in a composition are encrypted using this public key, and the KDM can thus only be decrypted by the intended target player.

Similarly, in embodiments to be described herein, KDM distribution systems have their own private RSA key with their public keys embedded in their device certificates. KDM distribution systems also receive a KDM, conventionally called a distribution KDM (DKDM), from the mastering system that created the encrypted DCP. It is not necessary that this DKDM be in any way different from a conventional KDM, except that it is targeted at a KDM distribution system rather than a digital cinema player.

In embodiments to be described herein, the KDM distribution system also has a database of device certificates along with theatre details so that KDMs can be generated as required for each theatre for the desired validity period.

Since no standards exist that govern KDM distribution systems, such systems are free to ignore the original validity period of the DKDM. Once a DKDM is issued to a KDM distribution system, that system has equal ability to generate KDMs for that composition targeted at any digital cinema player for which the device certificate is available with the KDM distribution system.

Thus, DKDMs are only issued to trusted entities today, because a significant risk exists that an unscrupulous party will misuse a DKDM once it has been issued to their KDM distribution system. Such an unscrupulous party may exceed the bounds of any legal agreement specifying restrictions on the use the DKDM only to create KDMs for a single region or for a particular period of time when rights for the content are assigned by the agreement.

As a result, today's standard practice is to authorize only a single entity to manage all KDMs for a given composition (*e.g.*, a feature film); that one entity is tasked with issuing every KDM required anywhere in the world for that composition. This does not mirror the business arrangements for movie distribution, wherein different territories are sold exclusively to companies for a fixed period. Because of the aforementioned ability of a KDM distribution system to issue KDMs for any target digital cinema player regardless of the territory in which it is situated, most film production companies are loathe to risk providing DKDMs to unreliable third-party entities.

From the above, it is clear that the enforcement of the validity window for a KDM takes the form of a rule. Introduced herein are distribution systems and methods that enhance the KDM by incorporating one or more rules that address one or more geographic restrictions. Such geographic restrictions do require the KDM distribution system to be aware of the location of each target digital cinema player. If a KDM distribution system should enforce the DCI specified rules of validity along with rules of geography as taught herein, the task of distributing content worldwide may be greatly assisted.

For example, a feature film is usually provided to a regional distributor on mutually agreed financial terms for exploitation in a territory for a specific period of time, e.g., one year for the territory of Australia and New Zealand. An enhanced DKDM with geographic restrictions could specify the applicable territories as Australia and New Zealand along with the validity range of one year. With an enhanced KDM distribution system that enforces these rules as the target for the enhanced KDM, the content owner could be secure in the knowledge that his contracted content assignment rights would be enforced by the KDM distribution system as well.

Assuming digital cinema players enforce the enhanced rules of geography as they do conventional rules, a territorial restriction system results that holds the promise of being significantly better than the region coding systems employed in conventional digital versatile discs (DVDs) and Blu-Ray® discs. In various embodiments described herein, such enhanced digital cinema players include location awareness capability.

A "region," as that term is used herein, refers to a geographical area and includes, but is not limited to, a continent, a subcontinent, a country, a state, a county, a city, a town or any other geographical division or an area defined by a boundary, arbitrary or based on physical features.

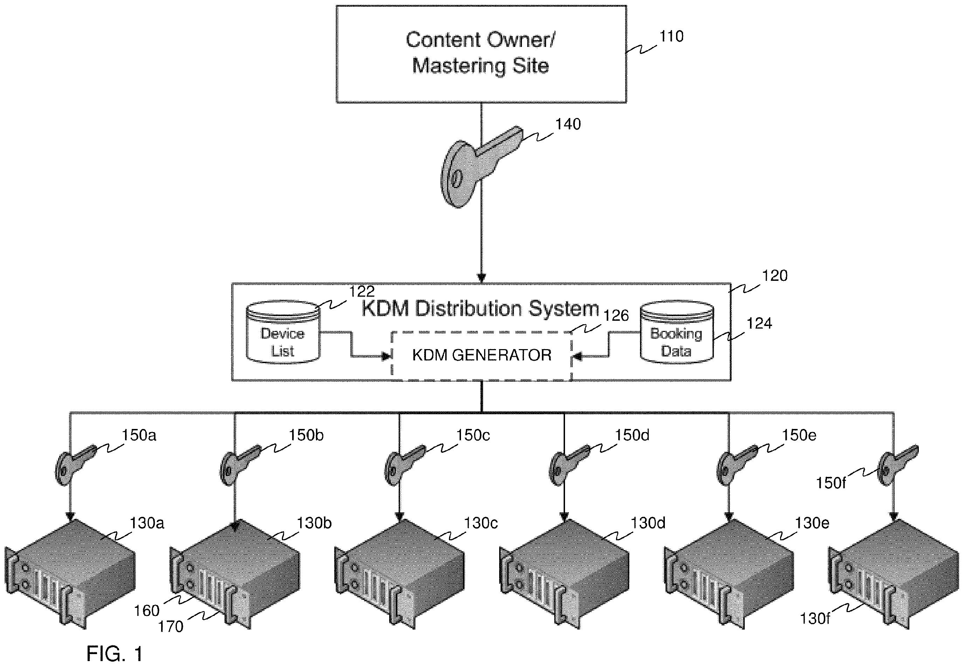

Turning now to FIG. 1, illustrated is a block diagram of one embodiment of a system for controlling digital cinema content distribution including a system for distributing KDMs and various, typically geographically distributed players for playing compositions contained in the DCPs, using keys contained in KDMs. The illustrated embodiment of the infrastructure includes a mastering site 110 operable to generate one or more DKDMs on behalf of a content owner. FIG. 1 illustrates one such DKDM 140. In one embodiment, the mastering site 110 is associated with a motion picture studio that creates one or more compositions. In another embodiment, the mastering site 110 is associated with a distributor that has the legal right to distribute one or more compositions that have been created by another entity (*e.g.*, a motion picture studio).

The embodiment of FIG. 1 further shows a distribution site 120 operable to generate one or more (exhibition) KDMs 150a, 150b, 150c, 150d, 150e, 150f in accordance with the DKDM 140 received from the mastering site 110. In one embodiment, many distribution sites, including the distribution site 120, receive DKDMs from the mastering site. In a typical embodiment, each of the DKDMs differ in terms of region, thereby enabling the distribution sites to distribute compositions only within their corresponding allowed regions. In one embodiment, the regions do not overlap one another, such that each distribution site holds exclusive distribution rights within its corresponding region.

The illustrated embodiment of the distribution site 120 includes a KDM distribution system. In the illustrated embodiment, the KDM distribution system includes a device list 122, which may take the form of a database, booking data 124, which may take the form of a database, and a KDM generator 126.

In the illustrated embodiment, the device list 122 contains the device certificates of at least some target digital cinema players located in the region that the distribution site 120 is supposed to serve or, in other words, the region to which the distribution site 120 is allowed to distribute compositions. For example, the device list may contain the device certificates of all digital cinema players located in a particular multiplex that is, in turn, located in a city in a state within which the distribution site 120 is licensed to distribute. In one embodiment, the device list 122 contains the device certificates of all of the target digital cinema players located in the region that the distribution site 120 is supposed to serve.

In the illustrated embodiment, the booking data 124 contains schedules defining the compositions that are supposed to be played using the target digital cinema players during specified periods of time. For example, the booking data 124 may contain a schedule of each composition that the particular multiplex referred to above is licensed to play during the week of July 14-20 of a given year. The booking data 124 may even define which composition each of the target players located in the multiplex is supposed to play. For example, the booking data 124 may assign a first composition (*e.g.*, a major feature film) to players #1 and #2 (located in larger auditoriums) during that week of July and a second composition (*e.g.*, a minor feature film) to player #3 (located in a smaller auditorium) during the same week.

The KDM generator 126 is operable to create an (exhibition) KDM (*e.g.*, the KDM 150a, 150b, 150c, 150d, 150e or 150f) for a particular composition using the DKDM 140 provided to the distribution site 120, a device certificate from the device list 122 and the booking data 124. For example, the KDM generator 126 may create an (exhibition) KDM for the player #1 using the distribution KDM (which, because the player #1 is located in the region in which the distribution site 120 is authorized to distribute, results in a valid (exhibition) KDM for the player #1), the device certificate for the player #1 (taken from the device list 122) and the booking data 124 indicating that the player #1 is booked to play the composition.

In the illustrated embodiment, the exhibition KDM includes data identifying a DCP to which the KDM corresponds. The data may identify the DCP in any manner. The exhibition KDM also includes at least one business rule identifying a location of a digital cinema player authorized to play the DCP. In one embodiment, the location is expressed as a political subdivision, such as a city, county, state, or country. In an alternative embodiment, the location is expressed in one or more Global Positioning Satellite (GPS) coordinates designating a region, which may or may not be arbitrary.

The exhibition KDM further includes data allowing the digital cinema player to play the DCP only if the digital cinema player qualifies according to the at least one business rule. In one embodiment, the data allows the digital cinema player to play the DCP includes data allowing the digital cinema player to decrypt the DCP.

In conventional KDM XML files, the validity window is specified using a pair of XML tags, <ContentKeysNotValidBefore> and <ContentKeysNotValidAfter>. Each of these two XML tags specifies a date and time in UTC (Universal Coordinated Time) format and thus is used in one embodiment to create a validity window business rule that the digital cinema player enforces within its software. In one embodiment, the region restriction business rule similarly specifies regions to be included and to be excluded in terms of one or more country, state and/or city combinations or in terms of one or more polygons specified as a set of GPS coordinates using other XML tags such as <ContentKeysValidAt> and <ContentKeysNotValidAt>.

In one specific embodiment, the XML tag <ContentKeysValidAt> or <ContentKeysNotValidAt> specifies multiple areas as shown in Table 1, below:

**Table 1 - Example <ContentKeysValidAt> XML Tag**

| |
|---|
| ```
  <CompositionPlayListId>urn:uuid:841ef4a5-3b73-4a14-b9f2-
 8c317387108f</CompositionPlayListId>
  <ContentTitleText Language="en">MARYAN-P1_FTR_S_TAM-EN_INT-
  XX_51_2K_20130715_RIC_OV</ContentTitleText>
  <ContentKeysNotValidBefore>2013-09-
 19T07:00:00+00:00</ContentKeysNotValidBefore>
``` |
| ```
  <ContentKeysNotValidAfter>2013-10-
  20T06:59:00+00:00</ContentKeysNotValidAfter>
  <ContentKeysValidAt>
    <Country code="IN">
     <State name="Tamil Nadu"/>
     <State name="Kerala"/>
     </State>
    </Country>
    <Country code="US"/>
    <Country code="CA">
     <Province name="Ontario"/>
     </Province>
    </Country>
    <georss:polygon>
     45.256 -110.45 46.46 -109.48 43.84 -109.86 45.256 -110.45
    </georss:polygon>
  </ContentKeysValidAt>
  <ContentKeysNotValidAt>
    <Country code="IN">
     <State name="Tamil Nadu"/>
       <City name="Chennai"/>
     </State>
    </Country>
``` |
| ```
  </ContentKeysNotValidAt>
``` |

With reference to Table 1, those skilled in the pertinent art will understand that multiple <City> XML tags can be specified within a <Province> or <State> XML tag, multiple <Province> or <State> XML tags can be specified within a <Country> XML tag, and no political subdivision e.g., city, state or province) XML tags are needed at all if the entire division (*e.g.*, state, province or country) is to be covered. In Table 1, players located in the province of Ontario, Canada and the states of Tamil Nadu and Kerala, India are authorized, while players located in the city of Chennai, Tamil Nadu, India, are not authorized. Further, players located in a polygon defined by the <georss:polygon> XML tag are authorized. The <georss:polygon> XML tag specifies an arbitrary polygon composed of GPS coordinates.

While KDM distribution systems capable of creating region restrictions need to know the geographic location of each player worldwide, such location information is typically readily available today. The system can thus ensure that the KDMs it generates conform to the region restrictions contained in a regionally restrictive KDM.

Those skilled in the pertinent art should understand that KDMs need not be the only method of specifying region restrictions. Such restrictions may also be specified outside of the KDM, say by a user manually selecting the areas for inclusion and exclusion and such data being stored on a database and associated with the conventional KDM.

Enhanced digital cinema players may also be similarly configured to include their installed location in terms of country, state and city or in terms of GPS coordinates. This may be done by a trusted installer using special administrative login credentials just like the time zone in which the digital cinema player is located is configured by an installer today. Alternatively, a digitally signed message may be sent to the player from its manufacturer or other trusted entity providing it with its installed location information. The aforementioned methods may be added to existing digital cinema players by a software upgrade today. Finally, an enhanced digital cinema player may also incorporate GPS capability and may thus be aware of its own location.

Returning to FIG. 1, the distribution site 120 then distributes one or more (exhibition) KDMs so created to various digital cinema players. FIG. 1 shows example digital cinema players 130a, 130b, 130c, 130d, 130e, 130f. The digital cinema players 130a, 130b, 130c, 130d, 130e, 130f then use their corresponding KDMs 150a, 150b, 150c, 150d, 150e, 150f to open received DCPs, after which they may play the composition(s) contained in the DCPs subject to time restrictions. Digital cinema players outside the region are disallowed from using DKMs from the distribution site 120 even if they are the proper target of the DKMs they receive, assuming they enforce the region restriction.

In the illustrated embodiment, each of the digital cinema players 130a, 130b, 130c, 130d, 130e, 130f includes a KDM receiver (one of which being designed 160). In one embodiment, the KDM receiver 160 is operable to receive a KDM for a DCP and determine whether the digital cinema player 130a, 130b, 130c, 130d, 130e, 130f is authorized to play the DCP using a device certificate for the digital cinema player based on a location of the digital cinema player 130a, 130b, 130c, 130d, 130e, 130f. In one embodiment, the location is expressed as a political subdivision, such as a city, county, state, or country. In an alternative embodiment, the location is expressed in one or more GPS coordinates designating a region, which may or may not be arbitrary. In the illustrated embodiment, each of the digital cinema players 130a, 130b, 130c, 130d, 130e, 130f further includes a DCP player (one of which being designed 170) associated with the KDM receiver 160 and operable to play the DCP only if the digital cinema player 130a, 130b, 130c, 130d, 130e, 130f is authorized to play the DCP.

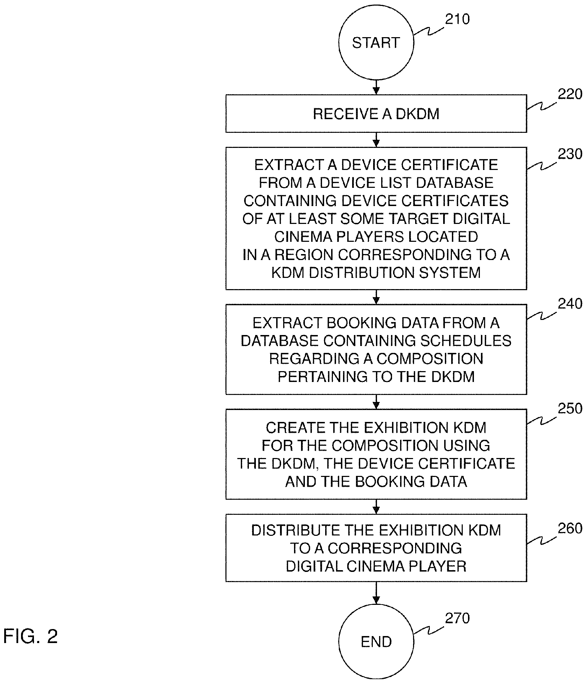

FIG. 2 is a flow diagram of one embodiment of a method of distributing DKMs to various, typically geographically distributed players for playing compositions contained in DCPs. The method begins in a start step 210. In a step 220, a DKDM is received (*e.g.*, from a mastering site). In a step 230, a device certificate is extracted from a device list database containing device certificates of at least some target digital cinema players located in a region corresponding to a KDM distribution system. In a step 240, booking data is extracted from a database containing schedules regarding a composition pertaining to the DKDM. In a step 250, the exhibition KDM is created for the composition using the DKDM, the device certificate and the booking data. In a step 260, the exhibition KDM is distributed to a corresponding target digital cinema player. The method ends in an end step 270.

## Claims

1. An exhibition key delivery message (KDM) distribution system operable to receive a distribution KDM (DKDM, 140) and comprising:
a device list database (122) containing device certificates of at least some target digital cinema players located in a unique region in which said KDM distribution system is allowed to distribute a composition;
booking data database (124) containing schedules regarding said composition pertaining to said DKDM; and
a KDM generator (126) operable to create an exhibition KDM (150a-150f) for said composition using a geographic rule in said DKDM, a device certificate from said device list database and booking data from said booking data database, wherein said geographic rule in said DKDM enables said exhibition KDM distribution system to distribute said exhibition KDM to only said at least some target digital cinema players (130a-130f) in said unique region.

2. The KDM distribution system as recited in Claim 1 wherein said geographic rule specifies said unique region using an Extensible Markup Language (XML) tag.

3. The KDM distribution system as recited in Claim 1 wherein said schedules define which theatres are allowed to play said composition.

4. The KDM distribution system as recited in Claim 1 wherein said schedules define which of said target digital cinema players (130a-130f) are allowed to play said composition.

5. The KDM distribution system as recited in Claim 1 wherein said KDM distribution system is further operable to distribute said exhibition KDM (150a-150f) to a corresponding target digital cinema player (130a-130f).

6. The KDM distribution system as recited in Claim 1 wherein said region is selected from the group consisting of:
a continent,
a subcontinent,
a country,
a state,
a county,
a city, and
a town.

7. A method (200) of creating an exhibition key delivery message (KDM), comprising:
receiving (220) a distribution KDM (DKDM) (140);
extracting (230) a device certificate from a device list database (122) containing device certificates of at least some target digital cinema players (130a-130f) located in a region to which a KDM distribution system has an exclusive distribution license;
extracting (240) booking data from a database (124) containing schedules regarding a composition pertaining to said DKDM; and
creating (250) said exhibition KDM for said composition using a geographic rule in said DKDM, said device certificate and said booking data, wherein said geographic rule in said DKDM enables said KDM distribution system to distribute said exhibition KDM to only said at least some target digital cinema players in said region.

8. The method (200) as recited in Claim 7 wherein said device list database (122) contains device certificates of all target digital cinema players (130a-130f) located in said region.

9. The method (200) as recited in Claim 7 wherein said schedules define which theatres are allowed to play said composition.

10. The method (200) as recited in Claim 7 wherein said schedules define which of said target digital cinema players (130a-130f) are allowed to play said composition.

11. The method (200) as recited in Claim 7 further comprising distributing said exhibition KDM (150a-150f) to a corresponding target digital cinema player (130a-130f).

12. The method (200) as recited in Claim 7 wherein said region is selected from the group consisting of:
a continent,
a subcontinent,
a country,
a state,
a county,
a city, and
a town.

13. A system for controlling digital cinema content distribution, comprising:
a mastering (110) site operable to generate a distribution key delivery message (DKDM) (140) on behalf of a content owner; and
distribution sites (120) containing exhibition key delivery message (KDM) distribution system operable to receive said DKDM, said exhibition KDM distribution system comprising an exhibition KDM distribution system as recited in one of claims 1-6.

14. An exhibition key delivery message (KDM) (150a-150f) received from an exhibition KDM distribution system, comprising:
data identifying a digital cinema package (DCP) to which said exhibition KDM corresponds;
at least one geographic rule identifying a unique region in which said DCP is authorized to be played; and
data allowing a digital cinema player (130a-130f) to play said DCP only if said digital cinema player is located within said unique region identified by said at least one geographic rule, wherein said exhibition KDM distribution system is enabled by a regional restriction received from a mastering site to distribute said exhibition KDM to only digital cinema players located in said unique region.

15. The exhibition KDM (150a-150f) as recited in Claim 14 wherein said data allowing said digital cinema player to play said DCP includes data allowing said digital cinema player (130a-130f) to decrypt said DCP.

16. The exhibition KDM (150a-150f) as recited in Claim 14 wherein said unique region is expressed as a selected one of:
a political subdivision, and
an area defined by Global Positioning Satellite (GPS) coordinates.

17. A digital cinema player, comprising:
a key delivery message (KDM) receiver (160) operable to receive a KDM for a digital cinema package (DCP) from a KDM distribution system and determine whether said digital cinema player is authorized to play said DCP using a device certificate for said digital cinema player based on whether said digital cinema player is located within a licensed region for distribution of said DCP, wherein said KDM distribution system is enabled by a regional restriction received from a mastering site to distribute said KDM to only digital cinema players located in said licensed region; and
a DCP player (170) associated with said KDM receiver and operable to play said DCP only if said digital cinema player is authorized to play said DCP and located in said unique region.

18. The digital cinema player (130a-130f) as recited in Claim 17 wherein said licensed region is expressed as a selected one of:
a political subdivision, and
an area defined by Global Positioning Satellite (GPS) coordinates.

19. The digital cinema player (130a-130f) as recited in Claim 17 wherein said licensed region is exclusive to said digital cinema player.

## Patentansprüche

1. Verteilungssystem für Vorführungs-Schlüssel-Übermittlungsnachrichten (KDM), das betreibbar ist, eine Verteilungs-KDM (DKDM, 140) zu empfangen, und umfasst:
eine Gerätelistendatenbank (122), die Gerätezertifikate von mindestens einigen Digitalkino-Ziel-Wiedergabegeräten enthält, die sich in einer eindeutigen Region befinden, in der dem KDM-Verteilungssystem erlaubt ist, eine Komposition zu verteilen;
eine Buchungsdatenbank (124), die Zeitpläne bezüglich der Komposition, die zu dem DKDM gehören, enthält; und
einen KDM-Generator (126), der betreibbar ist, eine Vorführungs-KDM (150a-150f) für die Komposition unter Verwendung einer geografischen Regel in dem DKDM, eines Gerätezertifikats aus der Gerätelistendatenbank, und von Buchungsdaten aus der Buchungsdatenbank zu erstellen, wobei die geografische Regel in dem DKDM es dem Vorführungs-KDM-Verteilungssystem ermöglicht, die Vorführungs-KDM nur an mindestens einige Digitalkino-Ziel-Wiedergabegeräte (130a-130f) in der eindeutigen Region zu verteilen.

2. KDM-Verteilungssystem nach Anspruch 1, wobei die geografische Regel die eindeutige Region unter Verwendung von Erweiterbare-Auszeichnungssprache- (XML) Tags spezifiziert.

3. KDM-Verteilungssystem nach Anspruch 1, wobei die Zeitpläne definieren, welchen Theatern erlaubt ist, die Komposition wiederzugeben.

4. KDM-Verteilungssystem nach Anspruch 1, wobei die Zeitpläne definieren, welchen der Digitalkino-Ziel-Wiedergabegeräten (130a-130f) erlaubt ist, die Komposition wiederzugeben.

5. KDM-Verteilungssystem nach Anspruch 1, wobei das KDM-Verteilungssystem ferner betreibbar ist, die Vorführungs-KDM (150a-150f) an ein entsprechendes Digitalkino-Ziel-Wiedergabegerät (130a-130f) zu verteilen.

6. KDM-Verteilungssystem nach Anspruch 1, wobei die Region ausgewählt ist aus der Gruppe bestehend aus:
einem Kontinent,
einem Subkontinent,
einem Land,
einem Staat,
einem Bezirk,
einer Großstadt, und
einer Stadt.

7. Verfahren (200) zur Erstellung einer Vorführungs-Schlüssel-Übermittlungsnachricht (KDM), umfassend:
Empfangen (220) einer Verteilungs-KDM (DKDM) (140);
Extrahieren (230) eines Gerätezertifikats aus einer Gerätelistendatenbank (122), die Gerätezertifikate von mindestens einigen Digitalkino-Ziel-Wiedergabegeräten (130a - 130f) enthält, die sich in einer Region befinden, für die ein KDM-Verteilungssystem eine exklusive Verteilungslizenz hat;
Extrahieren (240) von Buchungsdaten aus einer Datenbank (124), die Zeitpläne bezüglich einer Komposition, die zu dem DKDM gehört, enthält; und
Erstellen (250) der Vorführungs-KDM für die Komposition unter Verwendung einer geografischen Regel in dem DKDM, dem Vorrichtungszertifikat und den Buchungsdaten, wobei die geografische Regel in dem DKDM es dem KDM-Verteilungssystem ermöglicht, die Vorführungs-KDM nur an die mindestens einigen Digitalkino-Ziel-Wiedergabegeräte in der Region zu verteilen.

8. Verfahren (200) nach Anspruch 7, wobei die Gerätelistendatenbank (122) Gerätezertifikate aller in der Region befindlichen Digitalkino-Ziel-Wiedergabegeräte (130a-130f) enthält.

9. Verfahren (200) nach Anspruch 7, wobei die Zeitpläne definieren, welchen Theatern erlaubt ist, die Komposition wiederzugeben.

10. Verfahren (200) nach Anspruch 7, wobei die Zeitpläne definieren, welchen der Digitalkino-Ziel-Wiedergabegeräte (130a-130f) erlaubt ist, die Komposition wiederzugeben.

11. Verfahren (200) nach Anspruch 7, ferner umfassend Verteilen der Vorführungs-KDM (150a-150f) an ein entsprechendes Digitalkino-Ziel-Wiedergabegerät (130a-130f).

12. Verfahren (200) nach Anspruch 7, wobei die Region ausgewählt ist aus der Gruppe bestehend aus:
einem Kontinent,
einem Subkontinent,
einem Land,
einem Staat,
einem Bezirk,
einer Großstadt, und
einer Stadt.

13. System zur Steuerung von Digitalkinoinhaltsverteilung, umfassend:
eine Mastering- (110) Stelle, die betreibbar ist, eine Verteilungs-Schlüssel-Übermittlungsnachricht (DKDM) (140) im Namen eines Inhaltseigentümers zu generieren; und
Verteilungsstellen (120), die ein Verteilungssystem für Vorführungs-Schlüssel-Übermittlungsnachrichten (KDM) enthalten, das betreibbar ist, die DKDM zu empfangen, wobei das Vorführungs-KDM-Verteilungssystem ein Vorführungs-KDM-Verteilungssystem nach einem der Ansprüche 1 bis 6 umfasst.

14. Vorführungs-Schlüssel-Übermittlungsnachricht (KDM) (150a-150f), empfangen von einem Vorführungs-KDM-Verteilungssystem, umfassend:
Daten, die ein Digitalkinopaket (DCP) identifizieren, dem die Vorführung KDM entspricht;
mindestens eine geografische Regel, die eine eindeutige Region identifiziert, in der das DCP autorisiert ist, wiedergegeben zu werden; und
Daten, die es einem Digitalkino-Wiedergabegerät (130a-130f) erlauben, das DCP nur dann wiederzugeben, falls sich das Digitalkino-Wiedergabegerät innerhalb der durch die mindestens eine geografische Regel identifizierten eindeutigen Region befindet, wobei dem Vorführungs-KDM-Verteilungssystem durch eine von einer Mastering-Stelle empfangene regionale Beschränkung ermöglicht wird, die Vorführung KDM nur an Digitalkino-Wiedergabegeräte, die sich in dieser eindeutigen Region befinden, zu verteilen.

15. Vorführungs-KDM (150a-150f) nach Anspruch 14, wobei die Daten, die es dem Digitalkino-Wiedergabegerät erlauben, das DCP wiederzugeben, Daten enthalten, die es dem Digitalkino-Wiedergabegerät (130a-130f) erlauben, das DCP zu entschlüsseln.

16. Vorführung-KDM (150a-150f) nach Anspruch 14, wobei die eindeutige Region ausgedrückt wird als eine Auswahl aus:
einer politischen Unterabteilung, und
ein durch Global-Positionierungs-Satelliten- (GPS) Koordinaten definiertes Gebiet.

17. Digitalkino-Wiedergabegerät, umfassend:
einen Schlüssel-Übermittlungsnachrichten- (KDM) Empfänger (160), der betreibbar ist, eine KDM für ein Digitalkinopaket (DCP) von einem KDM-Verteilungssystem zu empfangen, und zu bestimmen, ob das Digitalkino-Wiedergabegerät autorisiert ist, das DCP wiederzugeben, unter Verwendung eines Gerätezertifikats für das Digitalkino-Wiedergabegerät, basierend entweder darauf, ob sich das Digitalkino-Wiedergabegerät innerhalb einer zur Verteilung des DCP lizenzierten Region befindet, wobei es dem KDM-Verteilungssystem durch eine von einer Mastering-Stelle empfangene regionale Beschränkung ermöglicht wird, die KDM nur an Digitalkino-Wiedergabegeräte, die sich in der lizenzierten Region befinden, zu verteilen; und
ein DCP-Wiedergabegerät (170), das dem KDM-Empfänger zugeordnet ist und betreibbar ist, das DCP nur dann wiederzugeben, falls das Digitalkino-Wiedergabegerät autorisiert ist, das DCP wiederzugeben, und sich in der eindeutigen Region befindet.

18. Digitalkino-Wiedergabegerät (130a-130f) nach Anspruch 17, wobei die eindeutige Region ausgedrückt wird als eine Auswahl aus:
einer politischen Unterabteilung, und
ein durch Global-Positionierungs-Satelliten- (GPS) Koordinaten definiertes Gebiet.

19. Digitalkino-Wiedergabegerät (130a-130f) nach Anspruch 17, wobei die lizenzierte Region exklusiv für das Digitalkino-Wiedergabegerät ist.

## Revendications

1. Système de distribution de message de délivrance de clé de présentation (KDM) conçu pour recevoir un KDM de distribution (DKDM, 140) et comprenant :
une base de données de listes de dispositifs (122) contenant des certificats de dispositif d'au moins certains lecteurs de cinéma numériques cibles situés dans une région unique dans laquelle ledit système de distribution de KDM est autorisé à distribuer une composition ;
une base de données de réservation (124) contenant des programmes concernant ladite composition relative audit DKDM ; et
un générateur de KDM (126) conçu pour créer un KDM de présentation (150a-150f) pour ladite composition à l'aide d'une règle géographique dans ledit DKDM, d'un certificat de dispositif issu de ladite base de données de listes de dispositifs, et de données de réservation issues de ladite base de données de réservations, ladite règle géographique dans ledit DKDM permettant audit système de distribution de KDM de présentation de distribuer ledit KDM de présentation uniquement auxdits au moins certains lecteurs de cinéma numériques cibles (130a-130f) dans ladite région unique.

2. Système de distribution de KDM selon la revendication 1, dans lequel ladite règle géographique spécifie ladite région unique à l'aide d'une balise de langage de balisage extensible (XML).

3. Système de distribution de KDM selon la revendication 1, dans lequel lesdits programmes définissent quels théâtres sont autorisés à jouer ladite composition.

4. Système de distribution de KDM selon la revendication 1, dans lequel lesdits programmes définissent lesquels desdits lecteurs de cinéma numériques cibles (130a-130f) sont autorisés à jouer ladite composition.

5. Système de distribution de KDM selon la revendication 1, dans lequel ledit système de distribution de KDM est en outre conçu pour distribuer ledit KDM de présentation (150a-150f) à un lecteur de cinéma numérique cible (130a-130f) correspondant.

6. Système de distribution de KDM selon la revendication 1, dans lequel ladite région est sélectionnée parmi le groupe comprenant :
un continent,
un sous-continent,
un pays,
un état,
un département,
une ville, et
une commune.

7. Procédé (200) de création d'un message de délivrance de clé de présentation (KDM), comprenant :
la réception (220) d'un KDM de distribution (DKDM) (140) ;
l'extraction (230) d'un certificat de dispositif à partir d'une base de données de listes de dispositifs (122) contenant des certificats de dispositifs d'au moins certains lecteurs de cinéma numériques cibles (130a-130f) situés dans une région pour laquelle un système de distribution de KDM détient une licence de distribution exclusive ;
l'extraction (240) de données de réservation à partir d'une base de données de réservation (124) contenant des programmes concernant une composition relative audit DKDM ; et
la création (250) dudit KDM de présentation pour ladite composition à l'aide d'une règle géographique dans ledit DKDM, dudit certificat de dispositif et desdites données de réservation, ladite règle géographique permettant audit système de distribution de KDM de distribuer ledit KDM de présentation uniquement auxdits certains lecteurs de cinéma numériques cibles dans ladite région.

8. Procédé (200) selon la revendication 7, dans lequel ladite base de données de listes de dispositifs (122) contient des certificats de dispositif de tous les lecteurs de cinéma numériques cibles (130a-130f) situés dans ladite région.

9. Procédé (200) selon la revendication 7, dans lequel lesdits programmes définissent quels théâtres sont autorisés à jouer ladite composition.

10. Procédé (200) selon la revendication 7, dans lequel lesdits programmes définissent lesquels desdits lecteurs de cinéma numériques cibles (130a-130f) sont autorisés à jouer ladite composition.

11. Procédé (200) selon la revendication 7, comprenant en outre la distribution dudit KDM de présentation (150a-150f) à un lecteur de cinéma numérique cible (130a-130f) correspondant.

12. Procédé (200) selon la revendication 7, dans lequel ladite région est sélectionnée parmi le groupe comprenant :
un continent,
un sous-continent,
un pays,
un état,
un département,
une ville, et
une commune.

13. Système destiné à commander une distribution de contenu de cinéma numérique, comprenant :
un site de mastering (110) conçu pour générer un message de délivrance de clé de distribution (DKDM) (140) pour le compte d'un propriétaire de contenu ; et
des sites de distribution (120) contenant un système de distribution de message de délivrance de clé de présentation (KDM) conçu pour recevoir ledit DKDM, ledit système de distribution de KDM de présentation comprenant un système de distribution de KDM de présentation selon l'une des revendications 1 à 6.

14. Message de délivrance de clé de présentation (KDM) (150a-150f) reçu à partir d'un système de distribution de KDM de présentation, comprenant :
des données identifiant un pack de cinéma numérique (DCP) auquel correspond ledit KDM de présentation ;
au moins une règle géographique identifiant une région unique dans laquelle la diffusion dudit DCP est autorisée ; et
des données permettant à un lecteur de cinéma numérique (130a-130f) de jouer ledit DCP uniquement si ledit lecteur de cinéma numérique se trouve dans ladite région unique identifiée par ladite au moins une règle géographique, ledit système de distribution de KDM de présentation étant uniquement autorisé à distribuer ledit KDM de présentation à des lecteurs de cinéma numériques situés dans ladite région unique, du fait d'une restriction régionale reçue en provenance d'un site de mastering.

15. KDM de présentation (150a-150f) selon la revendication 14, dans lequel lesdites données permettant audit lecteur de cinéma numérique de jouer ledit DCP comprennent des données permettant audit lecteur de cinéma numérique (130a-130f) de décoder ledit DCP.

16. KDM de présentation (150a-150f) selon la revendication 14, dans lequel ladite région unique est l'une au choix parmi :
une subdivision politique, et
une zone définie par des coordonnées de satellite de positionnement global (GPS).

17. Lecteur de cinéma numérique comprenant :
un récepteur (160) de message de délivrance de clé (KDM) conçu pour recevoir un KDM pour un pack de cinéma numérique (DCP) en provenance d'un système de distribution de KDM, et pour déterminer si le lecteur de cinéma numérique est autorisé à jouer ledit DCP à l'aide d'un certificat de dispositif pour ledit lecteur de cinéma numérique sur la base de la présence dudit lecteur de cinéma numérique dans une région autorisée pour la distribution dudit DCP, ledit système de distribution de KDM étant autorisé, par une restriction régionale reçue à partir d'un site de mastering, à distribuer ledit KDM uniquement à des lecteurs de cinéma numériques situés dans ladite région autorisée ; et
un lecteur de DCP (170) associé audit récepteur de KDM et conçu pour jouer ledit DCP uniquement si ledit lecteur de cinéma numérique est autorisé à jouer ledit DCP et se trouve dans ladite région unique.

18. Lecteur de cinéma numérique (130a-130f) selon la revendication 17, dans lequel ladite région autorisée est l'une parmi :
une subdivision politique, et
une zone définie par des coordonnées de satellite de positionnement global (GPS).

19. Lecteur de cinéma numérique (130a-130f) selon la revendication 17, dans lequel ladite région autorisée est exclusive audit lecteur de cinéma numérique.
